(19) **Europäisches Patentamt**

**European Patent Office**

**Office européen des brevets**

(11) **EP 1 050 549 A2**

(12) **EUROPÄISCHE PATENTANMELDUNG**

(43) Veröffentlichungstag:
**08.11.2000 Patentblatt 2000/45**

(51) Int. Cl.⁷: **C08G 18/08**, C08G 18/72,
C08L 75/04, C08G 18/66,
C08G 18/40, C08G 18/44

(21) Anmeldenummer: **00108024.1**

(22) Anmeldetag: **20.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **04.05.1999 DE 19920367**

(71) Anmelder:
• **BAYER AG
51368 Leverkusen (DE)**

• **Benecke-Kaliko Aktiengesellschaft
D-30419 Hannover (DE)**

(72) Erfinder:
• **Kaufhold, Wolfgang, Dr.
51061 Köln (DE)**
• **Hoppe, Hans-Georg
42799 Leichlingen (DE)**
• **Ohlinger, Rainer, Dr.
30519 Hannover (DE)**
• **Bühring, Jürgen, Dr.
30938 Burgwedel (DE)**

(54) **Aliphatische, sinterfähige thermoplastische Polyurethanformmassen**

(57)    Die Erfindung betrifft lichtstabile, sinterfähige thermoplastische Polyurethanformmassen mit reduzierter mechanischer Festigkeit, sowie bei Bedarf mit verbesserter Haptik und verbesserter Schreibempfindlichkeit, die sich nach dem Powder-slush-Verfahren verarbeiten lassen. Die erfindungsgemäßen Formmassen eignen sich besonders zur Herstellung genarbter Sinterfolien für die Innenauskleidung von Verkehrsmitteln, insbesondere als Abdeckung für Airbags in Kraftfahrzeugen.

EP 1 050 549 A2

**Beschreibung**

Die Erfindung betrifft lichtstabile, sinterfähige thermoplastische Polyurethanformmassen mit reduzierter mechanischer Festigkeit, verbesserter Haptik und verbesserter Schreibempfindlichkeit, die sich nach dem Powderslush-Verfahren verarbeiten lassen. Die erfindungsgemäßen Formmassen eignen sich besonders zur Herstellung genarbter Sinterfolien für die Innenauskleidung von Verkehrsmitteln, insbesondere als Abdeckung für Airbags in Kraftfahrzeugen.

Aliphatische thermoplastische Polyurethane (TPU) werden für den Einsatz in der Innenausstattung von Kraftfahrzeugen, z.B in Oberflächenverkleidungen von Instrumententafeln, bereits beschrieben, beispielsweise in DE-C-42 03 307. Naturgemäß besteht hierbei der Wunsch, ein einheitliches Aussehen der gesamten Oberflächenverkleidung zu erreichen und diese daher aus einem einzigen Material zu fertigen. Es tritt hierbei jedoch das Problem auf, dass sich die gängigen aliphatischen thermoplastischen Polyurethane mit hoher Lichtechtheit und Temperaturstabilität aufgrund ihrer hervorragenden mechanischen Eigenschaften, insbesondere der hohen Reißfestigkeit, nicht als Abdeckung für Airbags eignen, insbesondere dann nicht, wenn der Beifahrer-Airbag als unsichtbarer, integraler Bestandteil der Instrumententafel konzipiert ist.

In der DE-AS 16 94 135 ist ein Verfahren zur Herstellung von vernetzten Polyurethanen aus Diisocyanaten und niedermolekularen, mindestens zwei mit Isocyanatgruppen reagierende Wasserstoffatome enthaltenden Kettenverlängerungsmittel (zum Beispiel 1,4-Butandiol) und aus höhermolekularen, linearen Polyhydroxylverbindungen beschrieben, welche ein Gemisch aus 70 bis 90 Gew.-% Hexandiolpolycarbonat, das durch Umsetzung von 1,6-Hexandiol und Diarylcarbonaten hergestellt worden ist, und aus 10 bis 30 Gew.-% Mischpolyester aus u.a. Adipinsäure, 1,6-Hexandiol und 2,2'-Dimethyl-1,3-Propandiol enthalten. Die Vernetzung der Polyurethane wird durch Anwendung eines Überschusses an Diisocyanaten erreicht. Bei aus diesen Ausgangsstoffen hergestellten Polyurethanelastomeren bleibt die durch das Polycarbonat bedingte hohe Hydrolysebeständigkeit erhalten. Darüber hinaus zeigen derartige Elastomere aber auch eine verbesserte Kältefestigkeit und Verarbeitbarkeit gegenüber den Elastomeren, zu deren Herstellung als Polyolkomponente reines 1,6-Hexandiolpolycarbonat eingesetzt wurde. Die bessere Verarbeitbarkeit wirkt sich besonders in der flüssigen Phase - beispielsweise beim Gießverfahren - aus, da die verwendeten Polyester-Polycarbonatgemische bei den Verarbeitungstemperaturen eine niedrigere Viskosität aufweisen als das reine Hexandiolpolycarbonat, weswegen die resultierende Folie leichter blasenfrei vergossen werden kann. Die nach diesem Verfahren hergestellten Produkte können im Maschinen- und Fahrzeugbau eingesetzt werden.

In DE-C-42 03 307 ist eine thermoplastisch in Form von Sinterpulver verarbeitbare Polyurethanformmasse zur Herstellung genarbter Sinterfolien beschrieben, wobei das Pulver ausschließlich aus linearen, aliphatischen Komponenten besteht. Die Polyolkomponente setzt sich zusammen aus 60 bis 80 Gewichtsteilen eines aliphatischen Polycarbonatdiols mit einem Molekulargewicht $\overline{M}_n$ von 2000 und 40 bis 20 Gewichtsteilen eines Polydiols auf Basis Adipinsäure, Hexandiol und Neopentylglykol mit einem Molekulargewicht $\overline{M}_n$ von 2000. Ferner enthält die Mischung 1,6-Hexamethylendiisocyanat in einem Äquivalenzverhältnis von 2,8:1,0 bis 4,2:1,0 bezogen auf das Polyolgemisch und 1,4-Butandiol als Kettenverlängerungsmittel, wobei das Äquivalenzverhältnis des 1,4-Butandiols bezogen auf das Polygemisch 1,3:1,0 bis 3,3:1,0 beträgt. Diese Materialien zeichnen sich unter anderem durch eine hohe Zug-, Einreiß- und Weiterreißfestigkeit aus. Auch EP-A-399 272 offenbart Polyurethanfolien mit guten mechanischen Eigenschaften, insbesondere hoher Reißfestigkeit.

Es bestand daher die Aufgabe, Materialien mit hoher Lichtechtheit und Temperaturstabilität zu entwickeln, die eine geringere mechanische Festigkeit aufweisen als die bekannten thermoplastischen Polyurethane. Daneben sollen die erhaltenen Materialien bei Bedarf auch eine gegenüber dem reinen TPU verbesserte Haptik („Berühr- oder Griffempfinden") sowie verbesserte Schreibbeständigkeit aufweisen.

Es wurde nun gefunden, dass sich Materialien mit hoher Lichtechtheit und Temperaturstabilität erhalten lassen, die eine geringere mechanische Festigkeit aufweisen als die bekannten thermoplastischen Polyurethane, wenn man lichtstabile thermoplastische Polyurethane mit bestimmten weiteren Komponenten modifiziert.

Gegenstand der Erfindung sind daher sinterfähige thermoplastische Formmassen enthaltend ein thermoplastisches Polyurethan auf Basis eines aliphatischen Diisocyanats sowie mindestens einen weiteren Vertreter aus der Gruppe Styrol-Acrylnitril-Copolymerisat (SAN), Acrylnitril-Buadien-Styrol-Polymerisat (ABS), Acrylnitril-Styrol-Acrylkautschuk-Formmasse (ASA), Copolymeren aus Ethylen und/oder Propylen sowie Acrylsäure oder Methacrylsäure oder Natrium- oder Zinksalzen derselben, sowie Copolymeren aus Ethylen und/oder Propylen sowie Acrylsäureester oder Methacrylsäureester, vorzugsweise Methyl-, Ethyl- oder Butylester, und UV-Stabilisatoren und Antioxidantien.

Bevorzugt weisen die erfindungsgemäßen Formmassen eine Reißfestigkeit bei Raumtemperatur von nicht mehr als 20 N/mm$^2$, besonders bevorzugt nicht mehr als 18 N/mm$^2$ und eine Reißdehnung bei Raumtemperatur von nicht mehr als 450 % besonders bevorzugt nicht mehr als 400 % (jeweils gemessenen nach EN ISO 527-3/5 aber mit Zuggeschwindigkeit von 500mm/min) auf.

Bevorzugt beträgt die Reißfestigkeit der erfindungsgemäßen Formmassen bei -35°C nicht mehr als 35 N/mm$^2$, besonders bevorzugt nicht mehr als 30 N/mm$^2$ und die Reißdehnung bei -35°C nicht mehr als 250 %, besonders bevorzugt nicht mehr als 200 % (jeweils gemessenen nach EN ISO 527-3/2 aber mit Zuggeschwindigkeit von 500mm/min).

Der Schmelzindex (MVR) der erfindungsgemäßen Formmassen, gemessen bei 190°C mit einer Last von 2,16 kg (gemäß ISO 1133 Verfahren B), liegt vorzugsweise zwischen 10 ml/10 min und 200 ml/10 min, besonders bevorzugt zwischen 20 ml/10 min und 150 ml/10 min.

Weiterhin ist die Kälteflexibilität der erfindungsgemäßen Formmassen so hoch, dass der Kugelfalltest und der Dornbiegeversuch bei -50°C uneingeschränkt erfüllt werden.

In einer bevorzugten Ausführungsform enthalten die erfindungsgemäßen Formmassen

50 bis 90 Gew.-Teile thermoplastisches Polyurethan auf Basis eines aliphatischen Diisocyanats,
0 bis 25 Gew.-Teile ASA
0 bis 30 Gew.-Teile SAN
0 bis 25 Gew.-Teile ABS
0 bis 25 Gew.-Teile Copolymeren aus Ethylen und/oder Propylen sowie Acrylsäure oder Methacrylsäure oder Natrium- oder Zinksalzen derselben, sowie Copolymeren aus Ethylen und/oder Propylen sowie Acrylsäureester oder Methacrylsäureester oder Gemische dieser Komponenten
UV-Stabilisatoren und Antioxidantien in einer Menge von 0,2 bis 5,0 Gew.-%, bevorzugt 0,4 bis 4,0 Gew.-%, bezogen auf das TPU,
gegebenenfalls weitere übliche Hilfsmittel und Zusatzstoffe.

Beispiele für besonders bevorzugte Ausführungsformen sind Formmassen, die pro 100 Gew.-Teile Formmasse bis zu 30 Gew.-Teile, insbesondere bis zu 20 Gew.-Teile ASA enthalten.

In einer weiteren bevorzugten Ausführungsform enthalten die erfindungsgemäßen Formmassen

70 bis 90 Gew.-Teile thermoplastisches Polyurethan auf Basis eines aliphatischen Diisocyanats und
10 bis 30 Gew.-Teile SAN.

In einer weiteren bevorzugten Ausführungsform enthalten die erfindungsgemäßen Formmassen

50 bis 90 Gew.-Teile thermoplastisches Polyurethan auf Basis eines aliphatisehen Diisocyanats und

bis zu 30 Gew.-Teile SAN, insbesondere bis zu 20 Gew.-Teile SAN und zusätzlich bis zu 20 Gew.-Teile, insbesondere bis zu 15 Gew.-Teile ASA, ABS, EMA (Copolymer aus Ethylen und Acrylsäuremethylester) oder EBA (Copolymer aus Ethylen und Acrylsäurebutylester), pro 100 Gew.-Teile Formmasse.

Hinsichtlich der Haptik („trockener Griff") sind die erfindungsgemäßen Formmassen gegenüber den reinen TPU verbessert. Das reine TPU zeigt eine wachsartige Haptik.

Eine haptische Verbesserung ist dadurch gekennzeichnet, dass sich die Oberfläche der TPU-Formmasse trockner anfühlt.

Die Schreibempfindlichkeit der erfindungsgemäßen Formmassen ist ähnlich der des PVC (4N) oder besser (>4N).

Bevorzugt sind die erfindungsgemäßen aliphatischen thermoplastischen Polyurethane erhältlich aus

A) 100 bis 60 Mol-%, bevorzugt 100 bis 70 Mol-%, besonders bevorzugt 100 bis 80 Mol-% Hexamethylendiisocyanat (HDI) und 0 bis 40 Mol-%, bevorzugt 0 bis 30 Mol-%, besonders bevorzugt 0 bis 20 Mol-% andere aliphatische Diisocyanate,

B) Polyesterpolyol mit einem mittleren Molekulargewicht zwischen 600 und 5000 g/Mol, vorzugsweise 700 und 4200 g/Mol,

C) Kettenverlängerer mit einem mittleren Molekulargewicht von 60 bis 500 g/Mol,

D) gegebenenfalls Katalysatoren,

wobei das Äquivalenzverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt.

Anstelle des Polyesterpolyols B) können folgende Polyole eingesetzt werden:

Polyetherpolyol mit einem mittleren Molekulargewicht zwischen 600 und 5 000 g/Mol, bevorzugt zwischen 700 und 4 200 g/Mol,

Polycarbonatdiol mit einem mittleren Molekulargewicht zwischen 600 und 5000 g/Mol, vorzugsweise zwischen 700 und 4200 g/Mol,

Polyetherpolyol/Polyesterpolyol-Gemisch mit einem mittleren Molekulargewicht zwischen 600 und 5 000 g/Mol, vorzugsweise zwischen 700 und 4 200 g/Mol,

Polyetherpolyol/Polycarbonatdiol-Gemisch mit einem mittleren Molekulargewicht zwischen 600 und 5 000 g/Mol, bevorzugt zwischen 700 und 4 200 g/Mol,

Polyesterpolyol/Polycarbonatdiol-Gemisch mit einem mittleren Molekulargewicht zwischen 600 und 5 000 g/Mol, vorzugsweise zwischen 700 und 4 200 g/Mol.

Bevorzugt wird als Polyolkomponente ein Gemisch aus 20 bis 90 Gew.-Teilen eines Polyesteradipats mit einem mittleren Molekulargewicht von 500 bis 4000 g/Mol und 80 bis 10 Gew.-Teilen eines Polyetherpolyols mit einem mittleren Molekulargewicht von 1000 bis 5000 g/Mol eingesetzt.

Besonders bevorzugt besteht die Polyolkomponente aus einem Gemisch aus 30 bis 70 Gew.-Teilen eines Polyesteradipats mit einem mitleren Molekulargewicht von 500 bis 4000 g/Mol und 70 bis 30 Gew.-Teilen eines Polyetherpolyols mit einem mittleren Molekulargewicht von 1000 bis 5000 g/Mol.

Wird der Anteil des Polyesteradipates im Polyolgemisch über 50 % erhöht und werden besondere Anforderungen an die Hydrolyse gestellt, müssen dem Polyesteradipat bekannte Hydrolyseschutzmittel (wie z.B. Carbodiimide) zugesetzt werden.

Die verwendeten UV-Stabilisatoren sind beschrieben in R. Gächter, H. Müller (Eds.) im Taschenbuch der Kunststoff-Additive, 3- Auflage, Hanser Verlag, München 1989.

Als UV-Stabilisatoren wird besonders bevorzugt ein Gemisch von gehinderten Amin-Stabilisatoren (HALS) und Hydroxyphenylbenzotriazolen eingesetzt.

Als Antioxidantien können, die üblichen sterisch, gehinderten Phenole eingesetzt werden. Nähere Angaben sind der Fachliteratur zu entnehmen, beispielsweise R. Gächter, H. Müller (Eds.), Taschenbuch der Kunststoff-Additive, 3- Auflage, Hanser Verlag, München 1989.

Je nach Anforderung an das Formteil, welches aus dem erfindungsgemäßen TPU hergestellt wird, kann das Hexamethylendiisocyanat (HDI) partiell gegen ein oder mehrere andere aliphatische Diisocyanate, insbesondere Isophorondiisocyanat (IPDI), 1,4-Cyclohexandiisocyanat, 1-Methyl-2,4-cyclohexandiisocyanat, 1-Methyl-2,6-cyclohexandiisocyanat und Isomerengemisch davon, 4,4'-, 2,4'- und 2,2'-Dicyclohexylmethandiisocyanat und Isomerengemisch davon ersetzt werden.

Besonders bevorzugt sind auch erfindungsgemäße thermoplastische Polyurethane, die erhältlich sind aus

A) 100 bis 60 Mol-%, bevorzugt 100 bis 70 Mol-%, besonders bevorzugt 100 bis 80 Mol-% Hexamethylendiisocyanat (HDI) und 0 bis 40 Mol-%, bevorzugt 0 bis 30 Mol-%, besonders bevorzugt 0 bis 20 Mol-% andere aliphatische Diisocyanate,

B) Polyesterpolyol, Polyetherpolyol, einem Gemisch aus Polyetherpolyol und Polyesterpolyol, einem Gemisch aus Polyetherpolyol und Polycarbonatdiol oder einem Gemisch aus Polyesterpolyol und Polycarbonatdiol mit jeweils einem mittleren Molekulargewicht zwischen 600 und 5 000 g/Mol,

C) 80 bis 100 Gew.-% 1,6-Hexandiol und 0 bis 20 Gew.-% Kettenverlängerer mit einem mittleren Molekulargewicht von 60 bis 500 g/Mol,

D) gegebenenfalls Katalysatoren,

wobei das Äquivalenzverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt.

Als organische Diisocyanate A) können aliphatische und cycloaliphatische Diisocyanate eingesetzt werden, wie sie z.B. in Justus Liebigs Annalen der Chemie 562, S.75-136 beschrieben sind. Beispielhaft seien genannt Hexamethylendiisocyanat, Isophorondiisocyanat, 1,4-Cyclohexandiisocyanat, 1-Methyl-2,4-Cyclohexandiisocyanat und 1-Methyl-2,6-Cyclohexandiisocyanat sowie die entsprechenden Isomerengemische und 4,4'-, 2,4'- und 2,2'-Dicyclohexylmethandiisocyanat sowie die entsprechenden Isomerengemische. Bevorzugt besteht das eingesetzte organische Diisocyanat zu mindestens 50 Gew.-% aus 1,6-Hexamethylendiisocyanat.

Bei Anwendungen mit geringeren Anforderungen an die Lichtstabilität, z.B bei dunkel eingefärbten Formmassen, können bis zu 40 Mol-% des aliphatischen Diisocyanats durch aromatische Diisocyanate ersetzt werden. Diese sind ebenfalls in Justus Liebigs Annalen der Chemie 562, S.75-136 beschrieben. Beispiele sind 2,4 Toluylendiisocyanat, Gemische aus 2,4- und 2,6 Toluylendiisocyanat, 4,4'-, 2,2'- und 2,4'-Diphenylmethandiisocyanat, Gemische aus 2,4- und 4,4'-Diphenylmethandiisocyanat, urethanmodifizierte flüssige 2,4- und/oder 4,4'-Diphenylmethandiisocyanate, 4,4'-Diisocyanatodiphenylethan(1,2) und 1,5 Naphthylendiisocyanat.

Als Komponente B) werden lineare hydroxyltermmierte Polyole mit einem Molekulargewicht von 600 bis 5000 eingesetzt. Produktionsbedingt enthalten diese oft kleine Mengen an nichtlinearen Verbindungen. Häufig spricht man daher auch von "im wesentlichen linearen Polyolen". Bevorzugt sind Polyester und Polycarbonat-Diole oder Gemische aus diesen.

Geeignete Polyester-Diole können beispielsweise aus Dicarbonsäuren mit 2 bis 12 Kohlenstoff-atomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentyl-glykol-polyadipate, 1,6-Hexandiol-1,4-butandiol-polyadipate und Poly-caprolactone. Die Polyester-Diole besitzen Molekulargewichte von 600 bis 5000 und können einzeln oder in Form von Mischungen untereinander zur Anwendung kommen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyether-Diole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im wesentlichen linearen Polyether-Diole besitzen Molekulargewichte von 1000 bis 4000. Sie können sowohl einzeln als auch in Form von Mischungen untereinander zur Anwendung kommen.

Als Kettenverlängerungsmittel C) werden aliphatische Diole oder Diamine mit einem Molekulargewicht von 60 bis 500 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol, oder (cyclo)aliphatische Diamine, wie z.B. Isophorondiamin, Ethylendiamin, 1,2-Propylen-diamin, 1,3-Propylen-diamin, N-Methyl-propylen-1,3-diamin, N,N'-Dimethyl-ethylendiamin. Es können auch Gemische der oben genannten Kettenverlängerer eingesetzt werden. Daneben können auch kleinere Mengen an Triolen zugesetzt werden.

Bei Anwendungen mit geringeren Anforderungen an die Lichtstabilität, z.B bei dunkel eingefärbten Formmassen, können Teile der aliphatischen Diole und Diamine durch aromatische Diole und Diamine ersetzt werden. Beispiele für geeignete aromatische Diole sind Diester der Terephthalsäure mit Glykolen mit 2 bis 4 Kohlenstoff-atomen, wie z.B. Terephthalsäure-bis-ethylenglykol oder Terephthalsäure-bis-1,4-butandiol, Hydroxyalkylenether des Hydrochinons, wie z.B. 1,4-Di(-hydroxyethyl)-hydrochinon, und ethoxylierte Bisphenole. Beispiele für geeignete aromatische Diamine sind. 2,4-Toluylen-diamin und 2,6-Toluylen-diamin, 3,5-Diethyl-2,4-toluylen-diamin und 3,5-Diethyl-2,6-toluylen-diamin und primäre mono-, di-, tri- oder tetraalkylsubstituierte 4,4'-Diaminodiphenylmethane.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Besonders bevorzugt wird zur Herstellung der erfindungsgemäßen Formmassen ein aliphatisches thermoplastisches Polyurethan eingesetzt, das erhalten wird durch Umsetzung von

A) 100 bis 60 Mol-%, bevorzugt 100 bis 70 Mol-%, besonders bevorzugt 100 bis 80 Mol-% Hexamethylendiisocyanat (HDI) und 0 bis 40 Mol-%, bevorzugt 0 bis 30 Mol-%, besonders bevorzugt 0 bis 20 Mol-% andere aliphatische Diisocyanate,

B) Polyesterpolyol, Polyetherpolyol, einem Gemisch aus Polyetherpolyol und Polyesterpolyol, einem Gemisch aus Polyetherpolyol und Polycarbonatdiol oder einem Gemisch aus Polyesterpolyol und Polycarbonatdiol mit jeweils einem mittleren Molekulargewicht zwischen 600 und 5 000 g/Mol,

C) 80 bis 100 Gew.-% 1,6-Hexandiol und 0 bis 20 Gew.-% Kettenverlängerer mit einem mittleren Molekulargewicht von 60 bis 500 g/Mol,

D) gegebenenfalls Katalysatoren und

wobei das Äquivalenzverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt.

Vorzugsweise wird bei der kontinuierlichen Herstellung der thermoplastischen Polyurethane gemäß dem Extruder- oder Bandverfahren ein Katalysator eingesetzt. Geeignete Katalysatoren sind nach dem Stand der Technik bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt ist Dibutylzinndilaurat.

Neben den TPU-Komponenten und gegebenenfalls Katalysatoren können auch Hilfsmittel und Zusatzstoffe zugesetzt werden. Genannt seien beispielsweise Gleitmittel, wie Fettsäureester, deren Metallseifen, Fettsäureamide und Silikonverbindungen, Antiblockmittel, Inhibitoren, Stabilisatoren gegen Hydrolyse, Licht, Hitze und Verfärbung, Flammschutzmittel, Farbstoffe, Pigmente, anorganische und organische Füllstoffe und Verstärkungsmittel, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: „High Polymers", Band XVI, Polyurethane, Teil 1 und 2, Interscience Publishers 1962 bzw. 1964, R. Gächter, H. Müller (Ed.): Taschenbuch der Kunststoff-Additive, 3. Ausgabe, Hanser Verlag, München 1989 oder DE-A-29 01 774.

Die ASA-Komponente sollte so gewählt werden, dass der Schmelzindex MVR bei 220°C und 10 kg zwischen 3 und 40 ml/10 min, bevorzugt zwischen 3 und 30 ml/10 min liegt.

Die SAN-Komponente sollte so gewählt werden, dass der Schmelzindex MVR bei 220°C und 10 kg zwischen 5 und 80 ml/10 min, bevorzugt zwischen 8 und 70 ml/10 min, besonders bevorzugt zwischen 15 und 70 ml/10 min liegt.

Die ABS-Komponente sollte so gewählt werden, dass der Schmelzindex MVR bei 220°C und 10 kg zwischen 3 und 50 ml/10 min, bevorzugt zwischen 3 und 30 ml/10 min liegt.

Die Copolymere aus Ethylen und/oder Propylen sowie Acrylsäure oder Methacrylsäure oder Natrium- oder Zinksalzen derselben, sowie Copolymeren aus Ethylen und/oder Propylen sowie Acrylsäureester oder Methacrylsäureester oder Gemische all dieser Komponenten sollten einen Schmelzindex MVR bei 190°C und 2,16 kg zwischen 2 ml/10 min und 350 ml/10 min aufweisen, bevorzugt zwischen 2 ml/10 min und 200 ml/10 min.

TPU auf Basis aliphatischer Diisocyanate, die aufgrund ihrer Zusammensetzung schon eine ausreichend geringe mechanische Festigkeit haben, sind meist wegen der ungewünschten Haptik und/oder unzureichenden Schreibbeständigkeit als Abdeckung für Airbags im Instrumentafelbereich ungeeignet. Sie sind ebenso für Instrumenttafeln in Kraftfahrzeugen mit unsichtbaren Beifahrer-Airbag ungeeignet.

Die Schreibbeständigkeit und die Haptik können auch bei diesen TPU unter Beibehaltung der notwendigen geringen mechanischen Festigkeit durch Zugabe der beschriebenen ASA, SAN, ABS und/oder beschriebene Copolymere, deutlich verbessert werden.

Die erfindungsgemäßen Formmassen können hergestellt werden, indem man das nach im Prinzip bekannten Verfahren hergestellte TPU-Granulat mit den jeweiligen Zuschlagstoffen vermischt und in dem Fachmann bekannter Weise durch Reextrusion kompoundiert. Anschließend kann die erhaltene Formmasse granuliert und durch Kaltmahlen in ein sinterfähiges Pulver überführt werden, das sich für die Verarbeitung nach dem 'Powder-slush'-Verfahren eignet. Solche Pulver weisen bevorzugt Korngrößen von 50 bis 500 μm auf.

Die erfindungsgemäßen Formmasssen eignen sich zur Herstellung verschiedenster Formkörper, beispielsweise von Folien, insbesondere genarbten Sinterfolien. Pulverförmig kann die erfindungsgemäße Polyurethanformmasse nach dem bekannten "Powder-Slush-Verfahren" in beheizbaren Werkzeugen zu Häuten gesintert werden. Das dafür benötigte Pulver wird aus dem Granulat der erfindungsgemäßen Polyurethanformmasse durch Kaltmahlen gewonnen. Das Mahlgut wird in das an einer Seite offene, beheizbare Werkzeug eingebracht und auf der Innenwandung der beheizten Oberfläche innerhalb kurzer Zeit gesintert. Nach dem Abkühlen des Werkzeuges kann die Slush-Haut entnommen werden. Das Verfahren ist also analog demjenigen zur Herstellung von Armaturentafeln-Bespannungen aus PVC-Häuten. Beschrieben ist es beispielsweise in DE-A 39 32 923 als "Powder-Slush-Verfahren".

Wegen des scharfen Schmelzpunktes und des Vorliegens einer bereits ab dem Schmelzpunkt niedrigviskosen Schmelze sintert das Pulver auf der Innenwandung des beheizten Werkzeuges bereits innerhalb kurzer Zeit zu einer homogenen, von kleinen Löchern und von Blasen freien Folie, die aufgrund der hohen Kristallisationsfreudigkeit der erfindungsgemäßen Formmasse schon nach dem Abkühlen auf nur 100°C ohne Verzug entformt werden kann. Diese Faktoren machen das Sinterverfahren mit der erfindungsgemäßen Formmasse besonders wirtschaftlich.

Die aus dieser Polyurethanformmasse hergestellte Folie besitzt einen weichen und lederartigen Griff und neigt auch bei Lichteinwirkung nicht zu einer Veränderung des Glanzgrades. Das Narbenbild verändert sich bei der Heißluftalterung (110 bis 120°C) nicht; bei der Wärmealterung durch Lagerung auf einem Gitterrost bei 120°C tritt ebenfalls keine Veränderung auf.

Die aus den erfindungsgemäßen Polyurethanformmassen hergestellten Folien eignen sich beispielsweise für den Einsatz als Oberflächenverkleidung in Verkehrsmitteln, z.B. Flugzeugen, Schiffen, Eisenbahnen oder Kraftfahrzeugen, insbesondere als Verkleidung für Instrumententafeln und als Abdeckung für Airbags, da die Folien hervorragend auf dem Polyurethan-Hinterschaum der Instrumententafel haften. Gegenstand der vorliegenden Erfindung ist deshalb auch die Verwendung der erfindungsgemäßen Folien als Oberflächenverkleidung für Instrumententafeln, Türverkleidungen, Türbrüstungen, Schaltsäcken in Verkehrsmitteln, insbesondere in Kraftfahrzeugen.

Die Erfindung soll anhand der nachfolgenden Beispiele näher erläutert werden.

## **Beispiele**

Herstellung TPU (thermoplastische Polyurethane):

Die TPU wurden folgendermaßen kontinuierlich hergestellt:

Das Gemisch aus Polyol B), Kettenverlängerer C) und Dibutylzinndilaurat wurde in einem Kessel unter Rühren auf ca. 110°C erhitzt und zusammen mit dem entsprechenden Diisocyanat, welches mittels Wärmeaustauscher auf ca. 110°C erhitzt wurde, durch einen Statikmischer der Firma Sulzer (DN6 mit 10 Mischelementen und einer Scherrate von 500s$^{-1}$) intensiv gemischt und dann in den Einzug einer Schnecke (ZSK 32) geführt.

Soweit erforderlich, wurde das zweite von HDI verschiedene Diisocyanat in die 1. Zone der Schnecke (ZSK 32) eingespeist. Das gesamte Gemisch reagierte auf dem Extruder bis zur vollständigen Umsetzung aus und wurde anschließend granuliert.

Zusammensetzung der TPU (thermoplastische Polyurethane):

| TPU | HDI Mole/g | IPDI Mole/g | HPI/IPDI mol%/mol% | DE2020 Mole/g | PE225B Molel/g | Acclaim 2220 | 1,4BDO Mole/g | 1,6 HDO Mole/g | DBTL ppm |
|---|---|---|---|---|---|---|---|---|---|
| 1 | 5,09/855 | - | 100/0 | 1,0/2000 | 0,43/967 | - | 3,76/339 | - | 40 |
| 2 | 3,7/622 | - | 100/0 | - | 1,0/2250 | - | 2,7/243 | - | 40 |
| 3 | 5,34/898 | 0,59/131 | 90/10 | 1,0/2000 | 0,43/967 | - | - | 4,5/532 | 120 |
| 4 | 4,42/743 | - | 100/0 | 1,0/2000 | 0,43/967 | - | - | 2,99/353 | 40 |
| 5 | 4,86/817 | - | 100/0 | - | 1,0/2250 | 0,43/860 | - | 3,43/405 | 60 |

Die Mengen an DBTL sind bezogen auf die Polyolmischung.

Die TPU 2 und 5 enthalten zusätzliche folgende Additive:

| TPU | |
|---|---|
| 2 | 1,0 Gew.-% Stabaxol P200 (bez. auf PE225B) |

(fortgesetzt)

| TPU | |
|---|---|
| 5 | 1,0 Gew.-% Stabaxol P200 (bez. auf PE225B) 0,5 Gew.-% Irganox 1010 (bez. auf TPU) |

DBTL: Dibutylzinndilaurat
DE2020: Polycarbonatdiol auf 1,6-Hexandiol-Basis mit mittlerem Molekulargewicht $\overline{M}_n$ = 2250 g/mol
PE 225B: Polybutandioladipat mit mittlerem Molekulargewicht $\overline{M}_n$ 2250 g/mol
1,4BDO: 1,4-Butandiol
HDI: Hexamethylendiisocyanat
IPDI: Isophorondiisocyanat
Irganox®1010: Tetrakis[methylen-(3,5-di-tert.-butyl-4-hydroxyhydrocinnamate)]-methan (Fa. Ciba Geigy)
Irganox® 245: Ethylenbis(oxyethylen)bis-(3-tert-butyl-4-hydroxy-5-methyl-hydrocinnamate) (Fa. Ciba Geigy)
1,6 HDO: 1,6-Hexandiol
Tinuvin®328: 2-(2'-Hydroxy-3'-5'-di-tert-amylphenyl)benzotriazol (Fa. Ciba Geigy)
Tinuvin® 622: Dimethylsuccinatpolymer mit 4-Hxdroxy-2,2,6,6-tetramethyl-1-piperidin ethanol (Fa. Ciba Geigy)
Loxiol® G78: Stearinsäure (Fa. Hoechst)
Acclaim® 2220: Polyetherpolyol mit Polyoxyproylen-Polyoxyethyleneinheiten (mit ca. 85% primären Hydroxylgruppen und einem mittleren Molekulargewicht von $\overline{M}_n$ 2000 g/mol)( Fa. Lyondell)
Stabaxol® P 200: Aromatisches Polycarbodiimid (Fa. Rhein-Chemie)

**Kompoundierung:**

Die Kompoundierung der TPU mit den übrigen Komponenten erfolgte auf einem Extruder des Typs DSE 25, 4 Z, 360 Nm, der folgenden Aufbau aufweist:

1. Einzugszone (40°C),
2. erste Heizzone (160°C) mit Knetzone,
3. zweite Heizzone (165°C) mit Förderelementen und Knetzone,
4. dritte Heizzone (170°C) mit Knetzone, Förderelementen und Vakuumentgasung,
5. vierte Heizzone (175°C) mit Förderelementen,
6. Umlenkkopf (185°C) und Düse (180°C).

Die Aufgabe des TPU und der übrigen Komponenten erfolgte gravimetrisch, wobei ein Durchsatz von 8 kg/h eingestellt wurde. Die Kompoundierung erfolgte in einem Schritt bei einer Schneckendrehzahl von 180 min$^{-1}$. Der aus dem Extruder austretende Strang wurde mittels Stranggranulierung zu ca. 2 mm langem Zylindergranulat aufgearbeitet und anschließend in einem Vakuumtrockenschrank für 1 h bei 60°C getrocknet.

Die Dosierung der zu kompoundierenden Komponenten kann in unterschiedlicher Weise erfolgen:

a) die vorgemischten Granulate, pulverförmige Additive (Stabilisatoren, Pigmente) und flüssige Komponenten (z.B UV-Stabilisatoren) werden über separate gravimetrische Dosierungen in die Einfüllzone eingebracht;

b) wie a), jedoch werden Flüssigkomponenten über eine Seitendosierung zugeführt;

c) alle Komponenten werden in einem Heizmischer bei 90°C vorgemischt. Hierbei diffundieren die flüssigen Komponenten in das Granulat, dabei verkleben pulverförmige Komponenten mit dem Granulat. So erhält man eine trockene, förderfahige Vormischung, die über eine Dosierung in den Extruder eingebracht werden kann.

Nach der Kompoundierung und Granulierung wurde das Material auf einer mit flüssigem Stickstoff gekühlten Pralltellermühle bzw. Scheibenmühle kaltgemahlen. Es wurde ein Pulver mit einem mittleren Partikeldurchmesser <500 μm erhalten.

**Vergleich 1**

TPU 1 wurde in einem Kompoundierschritt mit Standardpigmenten (2% Elftex® 435 von Cabod), UV-Stabilisator (Tinuvin®328 und 622), Antioxidans (Irganox® 245) und Trennmittel (Loxiol® G78) versetzt, reextrudiert, granuliert und abschließend unter Kühlung mit flüssigem Stickstoff zu feinem Pulver mit einer Kornverteilung von 50 bis 500 µm gemahlen.

**Vergleich 2 bis 5**

Die Vergleichsversuche 2 bis 5 wurden wie der Vergleichsversuch 1 mit dem jeweiligen TPU 2 bis 5 durchgeführt.

**Beispiel 1**

85 Gew.-Teile TPU 1 wurden mit 15 Gew.-Teilen ASA (Acrylnirilgehalt 22 %, Styrolgehalt 58 %, Acrylatkautschukgehalt 20 %, MVR (220°C 10 kg) 28 ml/10 min) zusammen mit Standardpigmenten (2 % Elftex[®] 435 von Cabod), UV-Stabilisator (Tinuvin[®] 328 und 622), Antioxidans (Irganox[®] 245) und Trennmittel (Loxiol[®] G78), kompoundiert.

**Beispiel 2**

85 Gew.-Teile TPU2 wurden mit 15 Gew.-Teilen ASA (Acrylnitrilgehalt 22 Gew.%, Styrolgehalt 58 Gew.-%, Acrylatkautschukgehalt 20 Gew.-%, MVR (220°C, 10 kg) 28 ml/10 min) zusammen mit Standardpigment (2 % Elftex[®] 435 von Cabod), UV-Stabilisator (Tinuvin[®] 328 und 622), Antioxidans (Irganox[®] 245) und Trennmittel (Loxiol[®] G78) kompoundiert.

**Beispiel 3**

80 Gew.-Teile TPU2 wurden mit 20 Gew.-Teilen ABS (Acrylnirilgehalt 23 Gew.-%, Buadiengehalt 32 Gew.-%, Styrolgehalt 45 Gew.-%; MVR (220°C, 10 kg) 6 ml/10min) zusammen mit Standardpigment (2 % Elftex[®] 435 von Cabod), UV-Stabilisator (Tinuvin[®] 328 und 622), Antioxidans (Irganox[®] 245) und Trennmittel (Loxiol[®] G78) kompoundiert.

**Beispiel 4**

70 Gew.-Teile TPU 2 wurden mit 30 Gew.-Teilen SAN (MVR (220°C, 10 kg) 60 ml/10 min; 30 Gew.-% Acrylnitrilgehalt, 70 Gew.-% Styrolgehalt) zusammen mit Standardpigment (2 % Elftex[®] 435 von Cabod), UV-Stabilisator (Tinuvin[®] 328), Antioxidans (Irganox[®] 245) und Trennmittel (Loxiol[®] G78) kompoundiert.

**Beispiel 5**

75 Gew.-Teile TPU2 wurden mit 15 Gew.-Teilen ASA (Acrylnitrilgehalt 22 Gew.-%, Styrolgehalt 58 Gew.-%, Acrylatkautschukgehalt 20 Gew.-%, MVR (220°C, 10 kg) 28 ml/10 min) und 10 Gew.-Teilen EMA (24 Gew.-% Methylestergehalt, MVR (190°C, 2,16 kg) 6 ml/10 min) zusammen mit Standardpigment (2 % Elftex[®] 435 von Cabod), UV-Stabilisator (Tinuvin[®] 328), Antioxidans (Irganox[®] 245) und Trennmittel (Loxiol[®] G78) kompoundiert.

**Beispiel 6**

70 Gew.-Teile TPU 2 wurden mit 15 Gew.-Teilen SAN (Acrylnitrilgehalt 22 Gew.-%, Styrolgehalt 58 Gew.-%, Acrylatkautschukgehalt 20 Gew.-%, MVR (220°C, 10 kg) 28 ml/10 min) und 15 Gew.-Teilen SAN (Acrylnitrilgehalt 30 %, Styrolgehalt 70 %, MVR (220°C, 10 kg) 60 ml/10 min) zusammen mit Standardpigment (2 % Elftex[®] 435 von Cabod), UV-Stabilisator (Tinuvin[®] 328), Antioxidans (Irganox[®] 245) und Trennmittel (Loxiol[®] G78) kompoundiert.

**Beispiel 7**

80 Gew.-Teile TPU2 wurden mit 20 Gew.-Teilen EMA (24 Gew.-% Methylestergehalt, MVR (190°C, 2,16 kg) 6 ml/10 min) zusammen mit Standardpigment (2 % Elftex[®] 435 von Cabod), UV-Stabilisator (Tinuvin[®] 328), Antioxidans (Irganox[®] 245) und Trennmittel (Loxiol[®] G78) kompoundiert.

**Beispiel 8**

80 Gew.-Teile TPU2 wurden mit 15 Gew.-Teilen ASA (Acrylnitrilgehalt 22 Gew.-%, Styrolgehalt 58 Gew.-%,

Acrylatkautschukgehalt 20 Gew.-%, MVR (220°C, 10 kg), 28 ml/10 min) und 5 Gew.-Teilen PMMA (Lucryl® G55, BASF AG) zusammen mit Standardpigment (2 % Elftex® 435 von Cabod), UV-Stabilisator (Tinuvin® 328), Antioxidans (Irganox® 245) und Trennmittel (Loxiol® G78) kompoundiert.

### Beispiel 9

85 Gew.-Teile TPU 3 wurden mit 15 Gew.-Teilen ASA (Acrylnitrilgehalt 22 Gew.-%, Styrolgehalt 58 Gew.-%, Acrylatkautschukgehalt 20 Gew.-%, MVR (220°C, 10 kg) 28 ml/10 min) zusammen mit Standardpigmenten (2 % Elftex® 435 von Cabod), UV-Stabilisator (Tinuvin® 328 und 622), Antioxidans (Irganox® 245) und Trennmittel (Loxiol® G78), kompoundiert.

### Beispiel 10

85 Gew.-Teile TPU 4 wurden mit 15 Gew.-Teilen ASA (Acrylnitrilgehalt 22 Gew.-%, Styrolgehalt 58 Gew.-%, Acrylatkautschukgehalt 20 Gew.-%, MVR (220°C, 10 kg) 28 ml/10 min) zusammen mit Standardpigmenten (2 % Elftex® 435 von Cabod), UV-Stabilisator (Tinuvin® 328 und 622), Antioxidans (Irganox® 245) und Trennmittel (Loxiol® G78), kompoundiert.

### Beispiel 11

90 Gew.-Teile TPU 5 wurden mit 10 Gew.-Teilen ASA (Acrylnitrilgehalt 22 Gew.-%, Styrolgehalt 58 Gew.-%, Acrylatkautschukgehalt 20 Gew.-%, MVR (220°C, 10 kg) 28 ml/10 min) zusammen mit Standardpigmenten (2 % Elftex® 435 von Cabod), UV-Stabilisator (Tinuvin® 328 und 622), Antioxidans (Irganox® 245) und Trennmittel (Loxiol® G78), kompoundiert.

Die in den Beispielen erhaltenen Granulate wurden unter Kühlung mit flüssigem Stickstoff zu feinem Pulver mit einer Kornverteilung von 50 bis 400 μm gemahlen.

Zur Herstellung von Prüfkörpern wurden die Pulver in einem beheizbaren Zylinder mit 21 cm Durchmesser und 15 cm Höhe zu Ringen geslusht. Bei einer durchschnittlichen Füllmenge von ca. 80 g dieser TPU-Pulver wurden Slush-Ringe mit ca. 0,8 mm Dicke erhalten.

An den in den Beispielen erhaltenen Materialien wurden folgende Messungen durchgeführt:

Reißfestigkeit und Reißdehnung bei Raumtemperatur gemäß EN ISO 527-3/5, aber mit Zuggeschwindigkeit von 500mm/min

Reißfestigkeit und Reißdehnung bei -35°Cgemäß EN ISO 527-3/2,

Fogging (3h /100°C) gemäß DIN 75201A,

Kondensat (16 h /120°C) analog DIN 75201B,

MVR bei 190°C und 2,16 kg gemäß ISO 1133 Verfahren B,

Lichtechtheit (5 Zyklen) gemäß DIN 75202, wobei bei der Beurteilungsskala von 1 bis 5 eine hohe Zahl einer guten Beständigkeit gegen UV-Licht entspricht

Wärmelagerung (500 h/120°C), hängend im Umlufttrockenschrank mit +/-2°C Toleranz.

Kugelfalltest: Die Probekörper werden bei -50°C 24 Stunden gelagert. Zum Kugelfalltest wird eine Prüfanordnung gem. DBL 5306 verwendet. Dabei fällt eine massive Stahlkugel aus 230 mm Höhe auf eine Grundplatte aus Stahl. Der Versuch ist als in Ordnung zu bewerten, wenn keine Beschädigung am Probekörper aufgetreten ist.

Dornbiegeversuch: Ein etwa 50 mm breiter und 100 mm langer Probekörper wird nach einstündiger Lagerung bei -50°C sofort voll um einen Dorn mit 20 mm Durchmesser gebogen. Der Versuch ist als in Ordnung zu beurteilen, wenn der Probekörper weder Weißbruch noch Risse aufweist.

Schreibempfindlichkeit: Zur Ermittlung der Schreibempfindlichkeit wird ein Erichsenstab 318 mit einer Gravierspitze Nr. 1 mit 0,4 mm Radius und einer Feder mit einer Federkraft zwischen 1 N und 10 N in ein Crockmeter eingesetzt. Der Crockmeterarm wird zusätzlich mit einem Gewicht von 10 n belastet. Mit dem Schieber des Erichsenstabes 318 wird die gewünschte Federkraft eingestellt. Dann wird der Erichsenstab 318 mittels des Crockmeterarms senkrecht ca. 100 mm über den auf einer harten Unterlage befindlichen Probekörper gezogen. Die Schreibempfindlichkeit wird über die Federkraft beurteilt, die notwendig ist, um eine sichtbare Oberflächenveränderung auf dem Probekörper zu generieren, ohne die Oberfläche zu verletzen. Dabei entspricht eine hohe aufzuwendende Kraft zur Erreichung der Schreibspur einer hohen Schreibbeständigkeit.

Die Ergebnisse der Messungen sind in der nachfolgenden Tabelle zusammengefaßt:

| | Vergleich 1 | Vergleich 2 | Vergleich 3 | Vergleich 4 | Vergleich 5 | Beispiel 1 | Beispiel 2 | Beispiel 3 | Beispiel 4 |
|---|---|---|---|---|---|---|---|---|---|
| Reißfestigkeit [MPa] | 33 | 25 | 24 | 22 | 19 | 20 | 13 | 18 | 13 |
| Reißdehnung [%] | 742 | 780 | 730 | 770 | 770 | 450 | 300 | 390 | 290 |
| Reißfestigkeit [MPa] –35°C | 50 | 35 | 40 | 34 | 32 | 32 | 35 | 26 | 30 |
| Reißdehnung [%] –35°C | 356 | 450 | 350 | 380 | 360 | 200 | 200 | 250 | 185 |
| Reißfestigkeit [MPa] 85°C | 12 | | | | | | 3 | | |
| Reißdehnung [%] 85°C | 600 | | | | | | 240 | | |
| Kugelfalltest -50°C | i.O. | i.O. | i.O. | i.O. | i.O. | i.O. | i.O. | i.O. | i.O. |
| Dornbiegeversuch -50°C | i.O. | i.O. | i.O. | i.O. | i.O. | i.O. | i.O. | i.O. | i.O. |
| Shorehärte A | 92 | 85 | 89 | 88 | 88 | 92 | 87 | 91 | 89 |
| Schreibempfind-lichkeit [N] | 4 | 2 | 1 | 1 | 1 | 6 | 5 | | |
| MVR | 38 | 42 | 48 | 51 | 67 | 39 | 43 | 27 | 32 |
| Haptik | n.i.O. | n.i.O. | n.i.O. | n.i.O. | n.i.O. | i.O. | i.O. | i.O. | i.O. |
| Lichtechtheit | 4-5 | 4 | 4-5 | 4-5 | 4-5 | 4-5 | 4-5 | 4-5 | 4 |
| Reißfestigkeit [MPa] nach 500h 120°C | 33 | 22 | 21 | 19 | | 20 | 14 | | |

| | Vergleich 1 | Vergleich 2 | Vergleich 3 | Vergleich 4 | Vergleich 5 | Beispiel 1 | Beispiel 2 | Beispiel 3 | Beispiel 4 |
|---|---|---|---|---|---|---|---|---|---|
| Reißdehnung [%] nach 500 h, 120°C | 720 | 730 | 630 | 660 | | 480 | 314 | | |
| Fogging [%] | 92 | 96 | 96 | 97 | | 97 | 96 | 92 | 98 |
| Kondensat [mg] 120°C | 3,3 | 1,7 | 2,6 | 2,7 | 2,8 | 2,8 | 2,5 | 2,7 | 2,2 |

i.O.　　= in Ordnung
n.i.O.　= nicht in Ordnung

| | Beispiel 5 | Beispiel 6 | Beispiel 7 | Beispiel 8 | Beispiel 9 | Beispiel 10 | Beispiel 11 |
|---|---|---|---|---|---|---|---|
| Reißfestigkeit [MPa] | 18 | 14 | 17 | 14 | 12 | 12 | 11 |
| Reißdehnung [%] | 400 | 390 | 394 | 360 | 140 | 190 | 250 |
| Reißfestigkeit [MPa] –35°C | 30 | 35 | 27 | 25 | 25 | 27 | 27 |
| Reißdehnung [%] –35°C | 200 | 150 | 250 | 170 | 120 | 160 | 193 |
| Reißfestigkeit [MPa] 85°C | | 3 | | | | | |
| Reißdehnung [%] 85°C | | 370 | | | | | |
| Kugelfalltest -50°C | i.O. | i.O. | i.O. | i.O. | i.O. | i.O. | i.O. |
| Dornbiegeversuch -50°C | i.O. | i.O. | i.O: | i.O. | i.O. | i.O. | i.O. |
| Shorehärte A | 89 | 87 | 88 | 89 | 90 | 91 | 91 |
| Schreibempfind-lichkeit [N] | 4 | | | | 4 | 4 | 5 |
| MVR | 35 | 47 | 31 | 38 | 45 | 45 | 54 |
| Haptik | | i.O. | | i.O. | i.O. | i.O. | i.O. |
| Lichtechtheit | 4 | 4-5 | 4 | 4 | 4-5 | 4 | 4-5 |
| Reißfestigkeit [MPa] nach 500h 120°C | | | | | | | |

|  | Beispiel 5 | Beispiel 6 | Beispiel 7 | Beispiel 8 | Beispiel 9 | Beispiel 10 | Beispiel 11 |
|---|---|---|---|---|---|---|---|
| Reißdehnung [%] nach 500 h, 120°C |  |  |  |  |  |  |  |
| Fogging [%] | 96 | 98 | 97 | 98 | 93 | 95 | 92 |
| Kondensat [mg] 120°C | 2,6 | 3,0 | 1,8 | 2,3 | 1,9 | 1,9 | 2,0 |

**Patentansprüche**

1. Sinterfähige thermoplastische Formmasse enthaltend ein thermoplastisches Polyurethan auf Basis eines aliphatischen Diisocyanats, sowie mindestens einen weiteren Vertreter aus der Gruppe bestehend aus Styrol-Acrylnitril-Copolymerisaten (SAN), Acrylnitril-Butadien-Styrol-Polymerisaten (ABS), Acrylnitril-Styrol-Acrylkautschuk-Formmassen (ASA), Copolymeren aus Ethylen und/oder Propylen sowie Acrylsäure oder Methacrylsäure oder Natrium- oder Zinksalzen derselben sowie Copolymeren aus Ethylen und/oder Propylen sowie Acrylsäureester oder Methacrylsäureester, vorzugsweise Methyl-, Ethyl- oder Butylester und UV-Stabilisatoren und Antioxidantien.

2. Formmasse gemäß Anspruch 1, die eine Reißfestigkeit bei Raumtemperatur von nicht mehr als 20 N/mm$^2$ und eine Reißdehnung bei Raumtemperatur von nicht mehr als 450 % (jeweils gemessenen nach EN ISO 527-3/5 mit einer Zuggeschwindigkeit von 500mm/min) aufweist.

3. Formmasse gemäß Anspruch 2, die eine Reißfestigkeit bei -35°C von nicht mehr als 35 N/mm$^2$ und eine Reißdehnung bei -35°C von nicht mehr als 250 % (jeweils gemessenen nach EN ISO 527-3/2 mit einer Zuggeschwindigkeit von 500mm/min) aufweist.

4. Formmasse gemäß Anspruch 1, deren Haptik gegenüber der des reinen thermoplastischen Polyurethans verbessert ist.

5. Sinterfähige thermoplastische Formmasse gemäß Anspruch 1, enthaltend ein thermoplastisches Polyurethan auf Basis eines aliphatischen Diisocyanates sowie Acrylnitril-Butadien-Styrol-Polymensat (ABS) oder Acrylnitril-Styrol-Acrylkautschuk-Formmasse (ASA), deren Schreibbeständigkeit gegenüber der des reinen TPU verbessert ist.

6. Sinterfähige thermoplastische Formmasse gemäß Anspruch 1, enthaltend 50 bis 90 Gew.-Teile thermoplastisches Polyurethan auf Basis eines aliphatischen Diisocyanates,

> 0 bis 25 Gew.-Teile ASA
> 0 bis 30 Gew.-Teile SAN
> 0 bis 25 Gew.-Teile ABS
> 0 bis 25 Gew.-Teile Copolymeren aus Ethylen und/oder Propylen sowie Acrylsäure oder Methacrylsäure oder Natrium- oder Zinksalzen derselben, sowie Copolymeren aus Ethylen und/oder Propylen sowie Acrylsäureester oder Methacrylsäureester oder Gemische dieser Komponenten,
> UV-Stabilisatoren und Antioxidantien in einer Menge von 0,2 bis 5,0 Gew.-%, bevorzugt 0,4 bis 4,0 Gew.-%, bezogen auf das TPU,
> gegebenenfalls weitere übliche Hilfsmittel und Zusatzstoffe.

7. Formmasse gemäß Anspruch 1, enthaltend ein aliphatisches thermoplastisches Polyurethan, das erhalten wird durch Umsetzung von

> A) 100 bis 60 Mol-% Hexamethylendiisocyanat (HDI) und 0 bis 40 Mol-% andere aliphatische Diisocyanate,

> B) Polyesterpolyol mit einem mittleren Molekulargewicht zwischen 600 und 5000 g/Mol,

> C) Kettenverlängerer mit einem mittleren Molekulargewicht von 60 bis 500 g/Mol

> D) gegebenenfalls Katalysatoren,

wobei das Äquivalenzverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt.

8. Formmasse gemäß Anspruch 1, enthaltend ein aliphatisches thermoplastisches Polyurethan, das erhalten wird durch Umsetzung von

> A) 100 bis 60 Mol-% Hexamethylendiisocyanat (HDI) und 0 bis 40 Mol-% andere aliphatische Diisocyanate,

> B) Polyetherpolyol mit einem mittleren Molekulargewicht zwischen 600 und 5000 g/Mol,

> C) Kettenverlängerer mit einem mittleren Molekulargewicht zwischen 60 und 500 g/Mol, D) gegebenenfalls Katalysatoren,

wobei das Äquivalenzverhältnis von Diisocyanat A) zu Polyol B) zwischen 1,5:1,0 und 10,0:1,0 liegt und wobei die NCO-Kennzahl (gebildet aus dem mit 100 multiplizierten Quotienten der Äquivalenzverhältnisse von Isocyanatgruppen und der Summe der Hydroxylgruppen aus Polyol und Kettenverlängerungsmittel) 95 bis 105 beträgt.

9. Formmasse gemäß Anspruch 1, enthaltend ein aliphatisches thermoplastisches Polyurethan, das erhalten wird durch Umsetzung von

A) 100 bis 60 Mol-% Hexamethylendiisocyanat (HDI) und 0 bis 40 Mol-% andere aliphatische Disocyanate,

B) Polyetherpolyol/Polyesterpolyol-Gemisch mit einem mittleren Molekulargewicht zwischen 600 und 5000 g/Mol,

C) einem Kettenverlängerer mit einem mittleren Molekulargewicht von 60 bis 500 g/Mol,

D) gegebenenfalls Katalysatoren,

wobei das Äquivalenzverhältnis von Diisocyanat A) zu Polyol B) zwischen 1,5:1,0 und 10,0:1,0 liegt und wobei die NCO-Kennzahl (gebildet aus dem mit 100 multiplizierten Quotienten der Äquivalenzverhältnisse von Isocyanatgruppen und der Summe der Hydroxylgruppen aus Polyol und Kettenverlängerungsmittel) 95 bis 105 beträgt.

10. Formmasse gemäß Anspruch 1, enthaltend ein aliphatisches thermoplastisches Polyurethan, das erhalten wird durch Umsetzung von

A) 100 bis 60 Mol-% Hexamethylendiisocyanat (HDI) und 0 bis 40 Mol-% andere aliphatische Diisocyanate,

B) Polyetherpolyol/Polycarbonatdiol-Gemisch mit einem mittleren Molekulargewicht von 500 bis 5000 g/Mol,

C) Kettenverlängerer mit einem mittleren Molekulargewicht von 60 bis 600 g/Mol,

D) gegebenenfalls Katalysatoren,

wobei das Äquivalenzverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt.

11. Formmasse gemäß Anspruch 1, enthaltend ein aliphatisches thermoplastisches Polyurethan, das erhalten wird durch Umsetzung von

A) 100 bis 60 Mol-% Hexamethylendiisocyanat (HDI) und 0 bis 40 Mol-% andere aliphatische Diisocyanate,

B) Polyesterpolyol/Polycarbonat-Diol-Gemisch mit einem mittleren Molekulargewicht zwischen 600 und 5000 g/Mol,

C) Kettenverlängerer mit einem mittleren Molekulargewicht von 60 bis 500 g/Mol,

D) gegebenenfalls Katalysatoren,

wobei das Äquivalenzverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt.

12. Formmasse gemäß Anspruch 1, enthaltend ein aliphatisches thermoplastisches Polyurethan, das erhalten wird durch Umsetzung von

A) 100 bis 60 Mol-% Hexamethylendiisocyanat (HDI) und 0 bis 40 Mol-% andere aliphatische Diisocyanate,

B) Polycarbonatdiol mit einem mittleren Molekulargewicht zwischen 600 und 5000 g/Mol,

C) Kettenverlängerer mit einem mittleren Molekulargewicht zwischen 60 und 500 g/Mol,

D) gegebenenfalls Katalysatoren,

wobei das Äquivalenzverhältnis von Diisocyanat A) zu Polyol B) zwischen 1,5:1,0 und 10,0:1,0 liegt und wobei die NCO-Kennzahl (gebildet aus dem mit 100 multiplizierten Quotienten der Äquivalenzverhältnisse von Isocyanatgruppen und der Summe der Hydroxylgruppen aus Polyol und Kettenverlängerungsmittel) 95 bis 105 beträgt.

13. Formmasse gemäß Anspruch 1, enthaltend ein aliphatisches thermoplastisches Polyurethan, das erhalten wird durch Umsetzung von

A) 100 bis 60 Mol-% Hexamethylendiisocyanat (HDI) und 0 bis 40 Mol-% andere aliphatische Diisocyanate,

B) Polyesterpolyol, Polyetherpolyol, einem Gemisch aus Polyetherpolyol und Polyesterpolyol, einerm Gemisch aus Polyetherpolyol und Polycarbonatdiol oder einem Gemisch aus Polyesterpolyol und Polycarbonatdiol mit jeweils einem mittleren Molekulargewicht zwischen 600 und 5 000 g/Mol,

C) 80 bis 100 Gew.-% 1,6-Hexandiol und 0 bis 20 Gew.-% Kettenverlängerer mit einem mittleren Molekulargewicht von 60 bis 500 g/Mol,

D) gegebenenfalls Katalysatoren,

wobei das Äquivalenzverhältnis von Diisocyanat A) zu Polyol B) zwischen 1,5:1,0 und 10,0:1,0 beträgt und wobei die NCO-Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt.

14. Formkörper, erhalten nach dem Powder-Slush-Verfahren aus Pulvern der Formmassen gemäß Anspruch 1.

15. Verwendung der Formkörper gemäß Anspruch 15 als Oberflächenverkleidung in Verkehrsmitteln.